# EUROPÄISCHE PATENTANMELDUNG

(11) **EP 4 011 546 A1**
(43) Veröffentlichungstag der Anmeldung: **15.06.2022**
(21) Anmeldenummer: 21000294.5
(22) Anmeldetag: 20.10.2021
(51) Int. Cl.: B23Q 3/155, B65G 1/04, B65G 1/06

(54) **MAGAZINSYSTEM, INSBESONDERE WERKZEUGMAGAZIN**

(30) Priorität: 09.12.2020 DE 202020005100 U
(71) Anmelder: De Crignis Blechverarbeitung GmbH, 86165 Augsburg (DE)
(72) Erfinder: Scharf, Manfred, 86447 Aindling (DE)
(74) Vertreter: Gallo, Wolfgang

(57) **Zusammenfassung**

Magazinsystem, insbesondere Werkzeugmagazin, das einen nach Art eines Hochregallagers organisierten Lagerblock mit einer Vielzahl von Lagerplätzen aufweist, die in einer Mehrzahl von Etagen mit jeweils einer Mehrzahl von Lagerplätzen angeordnet sind. Eine Vielzahl von Boxen (8) dient zur Aufnahme von im Magazin aufzubewahrenden und jeweils mit einer maschinenlesbaren Kodierung versehenen Werkzeugen oder Gegenständen vorgesehen,
wobei jede Box (8) an einem der Lagerplätze abstellbar ist. Zwischen dem Lagerblock und einer Ausgabe/Rückgabe-Position (1) ist eine Pufferzone (15, 16) mit Zwischenlagerplätzen zum Zwischenlagern einer Mehrzahl von Boxen (8) vorgesehen. Eine Transfereinrichtung mit einer Verfahreinheit (11, 12, 13) dient zum Transferieren von Boxen (8) zwischen den Lagerplätzen des Lagerblocks und Zwischenlagerplätzen der Pufferzone (15, 16) und weist eine Übergabeeinrichtung (6, 17, 18) zwischen der Pufferzone (15, 16) und der Ausgabe/Rückgabe-Position (1) auf.

## Beschreibung

Die Erfindung betrifft ein kompaktes Magazinsystem, insbesondere ein Werkzeugmagazin zur Lagerung und bedarfsweisen Ausgabe von Werkzeugen. Wenngleich die Erfindung nachstehend als Werkzeugmagazin beschrieben wird, schließt dies eine Verwendung zur Lagerung und bedarfsweisen Ausgabe von anderen Gegenständen als Werkzeugen nicht aus.

In Fertigungsbetrieben, in denen eine Vielzahl von häufig zu wechselnden Werkzeugen benötigt wird, wie beispielsweise Stanzwerkzeuge, sind automatisierte Werkzeugmagazine wünschenswert, die eine einfache Entnahme und Rückgabe von jeweils benötigten Werkzeugen ermöglichen, die außerdem kompakt und raumsparend sind, und die insbesondere ein zeitintensives Heraussuchen jeweils benötigter Werkzeuge durch Personal in dem Magazinsystem entbehrlich machen.

Aus der EP 3 208 034 A1 ist ein Werkzeugmagazin zur Bereitstellung von Werkzeugen für eine Werkzeugmaschine bekannt, wobei das Werkzeugmagazin eine Vielzahl von Aufbewahrungspositionen für Werkzeuge aufweist. Eine Transfereinrichtung dient dazu, Werkzeuge zwischen einer Schnittstelle zum Entnehmen eines jeweils angeforderten Werkzeugs oder zum Rückgeben eines Werkzeugs und der jeweiligen Aufbewahrungsposition zu bewegen.

Aus der Praxis bekannt ist auch ein Werkzeugmagazin in Gestalt eines Paternosters, in welchem eine entsprechende Anzahl von Lastschaukelwannen eingestellt ist, die jeweils ein Sortiment mit einer größeren Anzahl von Werkzeugen enthalten, und die durch den Umlauf des Paternosters wahlweise zu einer Entnahmeposition bewegbar sind. Zur Entnahme eines Werkzeugs muss erst die jeweils richtige Lastschaukelwanne ausgewählt und angefordert werden, und dann muss die Bedienungsperson, wenn sich diese Lastschaukelwanne an der Entnahmeposition befindet, aus deren Inhalt das richtige Werkzeug heraussuchen und entnehmen. Bei der Werkzeugrückgabe muss ebenso wieder die richtige Lastschaukelwanne aufgerufen und das Werkzeug händisch an seinen definierten Platz zurückgegeben werden. Verständlicherweise ist dieser Prozess des manuellen Heraussuchens und Rückgebens von Werkzeugen nicht nur langsam, sondern auch fehlerbehaftet. Eine Person, die ein Werkzeug braucht, kann nicht im Vorhinein erkennen, ob das Werkzeug sich überhaupt im Magazin befindet oder ob es bereits entnommen worden ist.

Aufgabe der Erfindung ist es, ein kompaktes Werkzeugmagazin zur automatisierten Werkzeugverwaltung einer Vielzahl von Werkzeugen zu schaffen, das sich durch besondere Flexibilität und Effizienz auszeichnet.

Diese Aufgabe wird gemäß der Erfindung durch das im Anspruch 1 definierte Werkzeugmagazin und dessen in den Unteransprüchen angegebene vorteilhafte Weiterbildungen gelöst.

Das erfindungsgemäße Werkzeugmagazin ist quasi als Mini-Hochregallagersystem ausgebildet, das eine Mehrzahl von übereinander angeordneten Etagen mit jeweils einer Mehrzahl von Aufbewahrungspositionen aufweist. Als Lagermittel für die Werkzeuge (oder sonstige Gegenstände) dienen jeweils gleich große Boxen, in welche das jeweilige Werkzeug einlegbar ist, und die jeweils an einer der Aufbewahrungspositionen positionierbar und mittels eines Transfersystems zwischen der jeweiligen Aufbewahrungsposition und einer Ausgabe/Rückgabe-Position beförderbar sind.

Jedes Werkzeug ist mit einem maschinenlesbaren Code versehen, welcher dieses Werkzeug identifiziert. Bei Rückgabe des jeweiligen Werkzeugs durch Einlegen in eine Box an der Ausgabe/Rückgabe-Position wird der Code gelesen und die Box mit dem Werkzeug an eine nächste freie Aufbewahrungsposition befördert. Diese nunmehr diesem bestimmten Werkzeug zugeordnete bestimmte Aufbewahrungsposition wird zusammen mit dem jeweiligen Werkzeugcode in einem Transfersystem des Werkzeugmagazins gespeichert, so dass bei der nächsten Anforderung dieses Werkzeugs das Transfersystem die Box mit diesem Werkzeug von der jeweiligen ihm zugeordneten Aufbewahrungsposition holt und zur Ausgabe/Rückgabe-Position befördert.

Bei dem erfindungsgemäßen Werkzeugmagazin ist also, im Gegensatz zum Stand der Technik nach der eingangs genannten EP 3 208 034 A1, einem bestimmten Werkzeug keine bestimmte Aufbewahrungsposition zugeordnet, sondern jedes Werkzeug kann an jeder beliebigen, gerade freien Aufbewahrungsposition gelagert werden, bis es wieder abgerufen wird, weil es im Transfersystem aufgrund der jeweils zusammen mit dem diesem Werkzeug zugeordneten Code gespeicherten momentanen Aufbewahrungsposition bei Anforderung des Werkzeugs durch eine Bedienungsperson ohne weiteres auffindbar ist und von seiner momentanen Aufbewahrungsposition geholt werden kann. Diese variable Zuordnung eine Aufbewahrungsposition zu einem bestimmten Werkzeug wird dadurch ermöglicht, dass alle Aufbewahrungspositionen durch gleich große Plätze im Werkzeugmagazin und gebildet sind, an welchen gleiche Boxen zur Aufnahme der Werkzeuge einstellbar sind, wobei nicht die Boxen, sondern die Werkzeuge selbst durch einen zugeordneten Code gekennzeichnet sind und daher die Lagerung eines jeweiligen Werkzeugs und die Abspeicherung an einer bestimmten momentanen Aufbewahrungsposition unabhängig von der jeweils benutzten Box durch das codierte Werkzeug selbst gesteuert wird.

Das erfindungsgemäße Werkzeugmagazin verfügt außerdem über einer Pufferzone zwischen den Aufbewahrungspositionen und der Ausgabe/Rückgabe-Position, um dort eine Mehrzahl auszugebender und/oder zurückgegebener Werkzeuge zwischenspeichern zu können.

Das Vorsehen einer Pufferzone ist für die Effizienz des erfindungsgemäßen Werkzeugmagazins in mehrfacher Hinsicht bedeutsam. Oft ist für eine Bearbeitungsmaßnahme nicht nur ein einzelnes Werkzeug erforderlich, sondern eine Gruppe von Werkzeugen. Im letzteren Fall kann das Transfersystem die einzelnen Werkzeuge des benötigten Werkzeugsatzes aus den jeweiligen Aufbewahrungspositionen in die Pufferzone überführen, von wo aus dann eine Mehrzahl von Werkzeugen gleichzeitig ausgegeben werden kann. Während der Werkzeugausgabe kann das Transfersystem bereits weitere angeforderte Werkzeuge herbeiholen, oder es kann zurückgegebene Werkzeuge wieder zu freien Aufbewahrungspositionen zurückführen. Insbesondere kann durch das Vorsehen der Pufferzone die Ausgabe von Werkzeugen beschleunigt werden, da die Ausgabe angeforderter Werkzeuge vorrangig erfolgen kann, während in der Pufferzone zwischengelagerte zurückgegebene Werkzeuge warten können, bis das Transfersystem sie zurückführt, während gerade keine Werkzeuganforderung zu bearbeiten ist. Weiter ermöglicht die Pufferzone es auch, dass angeforderte Werkzeuge nicht sofort ausgegeben werden müssen, sondern in der Pufferzone zwischengelagert werden können, bis die Bedienungsperson zeitversetzt die Ausgabe abruft. Außerdem können in der Pufferzone leere Boxen bereitgehalten werden, um auf Anforderung zurückzugebende Werkzeuge schnell aufnehmen zu können.

Zur Ausgabe oder Rückgabe von Werkzeugen kann an der Ausgabe/Rückgabe-Position jeweils die Ausgabe oder Rückführung einer Mehrzahl von Boxen bei jedem Ausgabe- oder Rückführungsvorgang vorgesehen sein, um bei Bedarf jeweils eine ganze Werkzeuggruppe gleichzeitig ausgeben oder zurückführen zu können. Das ist vorteilhaft, wenn häufig mehrere Werkzeuge gleichzeitig benötigt oder zurückgegeben werden, was beispielsweise bei Stanzwerkzeugen häufig vorkommt, wo ein Stempel, ein Abstreifer und eine Matrize gleichzeitig benötigt werden können.

Auf diese Weise bietet das erfindungsgemäße Werkzeugmagazin den Vorteil einer sehr hohen Effizienz.

Ein Ausführungsbeispiel der Erfindung wird nachstehend unter Bezugnahme auf die anliegenden Zeichnungen mehr im einzelnen beschrieben, in denen zeigt:
- Fig. 1: eine perspektivische Ansicht eines Werkzeugmagazin nach der Erfindung mit seiner Außenverkleidung,
- Fig. 2: den inneren Aufbau des erfindungsgemäßen Werkzeugmagazins unter Weglassung der Außenverkleidung sowie unter Weglassung des inneren Regalaufbaus, so dass die Aufbewahrungspositionen im Regalaufbau nur durch die dort einstellbaren Boxen dargestellt sind,
- Fig. 3: eine Darstellung ähnlich Fig. 2, wobei jedoch unter Weglassung der übrigen Komponenten des inneren Aufbaus nur die Boxen zur Markierung der Aufbewahrungspositionen dargestellt sind,
- Fig. 4: eine in Fig. 2 sichtbare Verfahreinheit mit einem Fahrturm eines Transfersystems des erfindungsgemäßen Werkzeugmagazins in separater Darstellung,
- Fig. 5: eine in Fig. 2 sichtbare Pufferzone des erfindungsgemäßen Werkzeugmagazins in separater Darstellung, und
- Fig. 6: die in Fig. 5 dargestellte Pufferzone zusammen mit der Ausgabe/ Rückgabe-Position des erfindungsgemäßen Werkzeugmagazins.

Alle Zeichnungen sind sehr schematisch gehalten, um das Wesentliche des erfindungsgemäßen Werkzeugmagazins möglichst gut erkennbar zu machen.

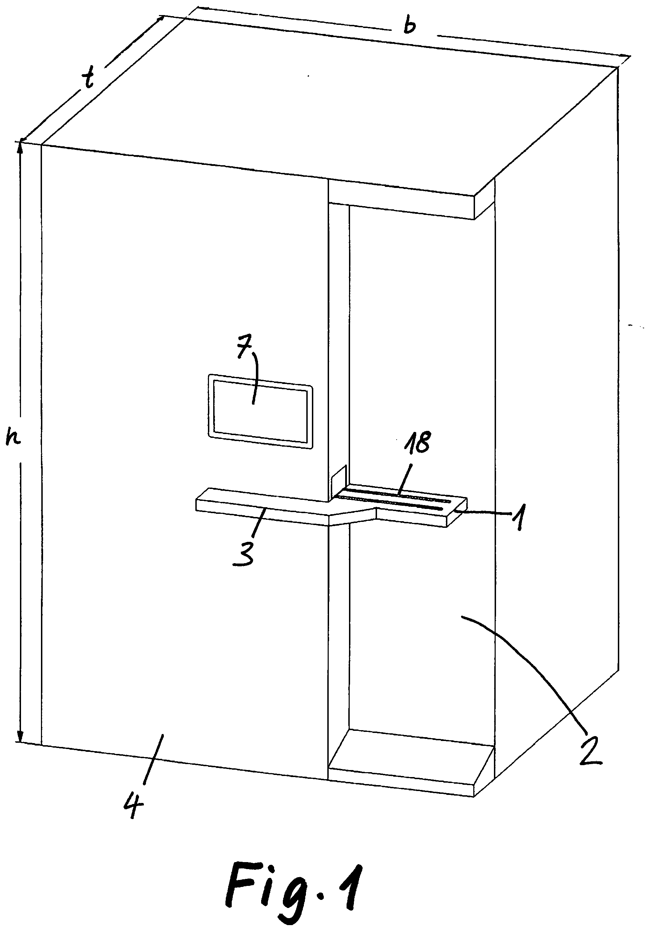

Fig. 1 zeigt in perspektivischer Darstellung ein Werkzeugmagazin nach der Erfindung in der Außenansicht auf die Verkleidung. Das Werkzeugmagazin hat beim Ausführungsbeispiel die Gestalt eines Quaders mit einer Höhe h, einer Breite b und einer Tiefe t. Die Höhe h kann beispielsweise etwa 3 m betragen, die Tiefe t kann beispielsweise etwa 2 m betragen, und die Breite b kann beispielsweise etwa 2,0 ... 2,5 m betragen, wobei natürlich die Maße entsprechend der Anzahl und der erforderlichen Größe der jeweiligen Aufbewahrungspositionen beliebig gewählt werden kann.

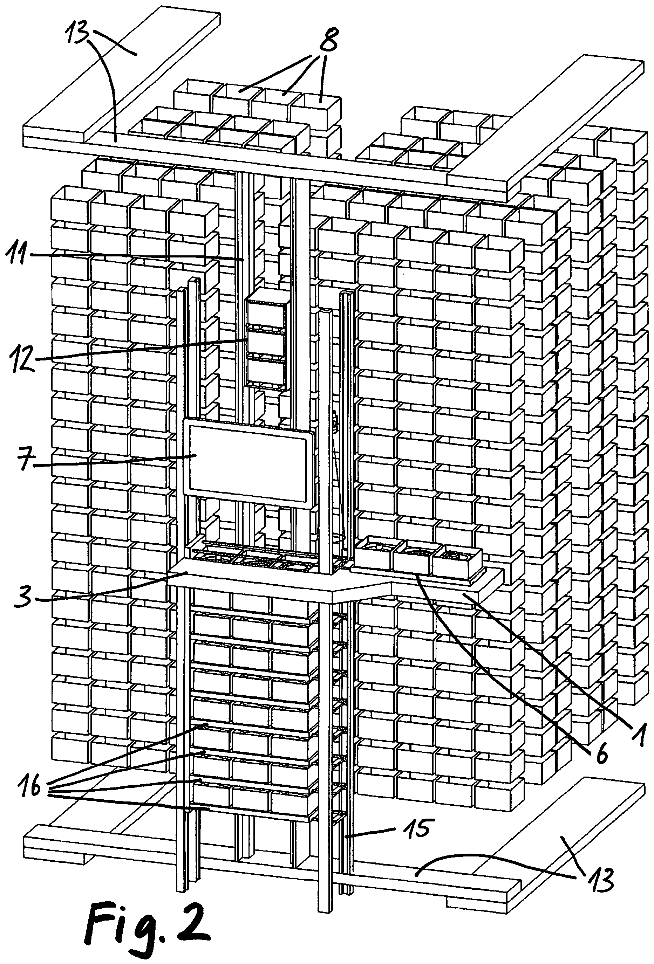

An der Frontseite der Verkleidung sieht man etwa auf halber Höhe einen Ausgabe/Rückgabe-Tisch 1, der sich in einer Nische 2 der Verkleidung an deren in Fig. 1 rechten vorderen Bereich befindet und die oben erwähnte Ausgabe/Rückgabeposition bildet, und der mit einem Ablagetisch 3 verbunden ist, der sich vor der Frontwand 4 der Verkleidung befindet. Dem Ausgabe/Rückgabe-Tisch 1 ist eine in der Verkleidung gebildete Transferöffnung 5 zugeordnet, über welche ein Schlitten 6 (in Fig. 2 sichtbar) zwischen dem Ausgabe-Rückgabe-Tisch 1 und einer innerhalb der Verkleidung befindlichen, nachstehend noch beschriebenen Pufferzone verfahrbar ist.

Über dem Ablagetisch 3 befindet sich in der Frontwand 4 der Verkleidung eine Bedienungstafel 7, die beispielsweise als Touchscreen ausgebildet sein kann. Über diese Bedienungstafel 7 kann eine Bedienungsperson bestimmte benötigte Werkzeuge aus dem Magazin abrufen, die Ausgabe dieser Werkzeuge auf den Ausgabe/Rückgabe-Tisch 1 sowie die Rückkehr des Schlittens 6 nach Entnahme der Werkzeuge steuern, den Erhalt ausgegebener Werkzeuge quittieren, oder die Rückgabe von Werkzeugen in das Werkzeugmagazin bewerkstelligen.

Der Aufbau des erfindungsgemäßen Werkzeugmagazins nach dem dargestellten Ausführungsbeispiel bei weggelassener Verkleidung ist in Fig. 2 wiederum perspektivisch dargestellt. Daraus ist ersichtlich, dass das Werkzeugmagazin in Gestalt eines Mini-Hochregallagersystems ausgebildet ist, das auf einer Vielzahl von Etagen jeweils eine Vielzahl von Lagerplätzen für jeweils eine Box 8 bereitstellt. Jeder Lagerplatz bildet eine Aufbewahrungsposition. Alle Boxen 8 haben die gleiche Größe, und demzufolge hat auch jeder Lagerplatz für jeweils eine Box 8 die gleiche Größe, so dass eine solche Box an jedem beliebigen (gerade freien) Platz innerhalb dieses Mini-Hochregallagersystems eingestellt werden kann. Die Lagerplätze für die Boxen 8 in jeder Etage des Mini-Hochregallagersystems sind durch Regalböden in jeder Etage gebildet, die in Fig. 2 samt dem zugehörigen Regalgestell weggelassen sind, um die Darstellung nicht verwirrend zu machen und den Aufbau klarer erkennbar zu machen. Jeder Lagerplatz ist also nur durch eine dort dargestellte Box 8 angedeutet.

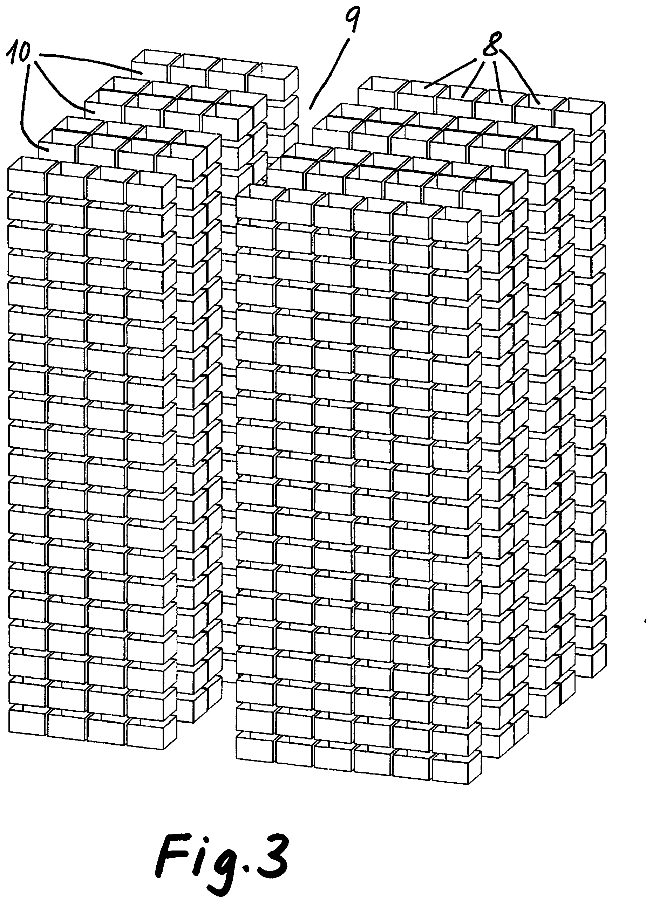

Der Lagerblock des Mini-Hochregallagersystems, wiederum ohne Regalböden und Regalgestell, ist in Fig. 3 noch einmal gesondert dargestellt. Es umfasst beim dargestellten Ausführungsbeispiel 1200 Lagerplätze für 1200 Boxen 8 (20 Etagen, 10 x 6 Plätze bzw. Boxen in jeder Etage). In Fig. 2 und noch besser in Fig. 3 ist erkennbar, dass in dem Lagerblock eine in Richtung der Tiefe des Lagerblocks verlaufende breitere Gasse 9 und mehrere in Breitenrichtung durch den Lagerblock verlaufende Gassen 10 gebildet sind, durch welche ein in Fig. 2 sichtbarer Fahrturm 11 einer Verfahreinheit verfahrbar ist, der mit einer als Aufzug ausgebildeten Boxentransfervorrichtung 12 ausgestattet ist, die durch entsprechendes Verfahren des Fahrturms in den Gassen 9, 10 des Lagerblocks Zugang zu jedem einzelnen Lagerplatz zum Einstellen oder Entnehmen einer Box hat.

In Fig. 2 ist auch ein oberer und unterer Führungsrahmen 13 für den Fahrturm 11 schematisch dargestellt, der das Verfahren des Fahrturms 11 durch die Gasse 9 in Tiefenrichtung des Regalblocks und durch die Gassen 10 in Breitenrichtung des Regalblocks ermöglicht. Der obere und untere Führungsrahmen 13, der Fahrturm 11 und dessen als Aufzug im Fahrturm vertikal für erfahrbare Boxentransfervorrichtung 12 bilden miteinander die Verfahreinheit zum Bewegen der beim Ausführungsbeispiel drei Transferplattformen 14 des Boxentransfervorrichtung 12 in den drei Raumachsen, so dass jeder einzelne Boxenplatz in dem Lagerblock durch jede Transferplattform 14 zugänglich ist, um eine Box abstellen oder entnehmen zu können.

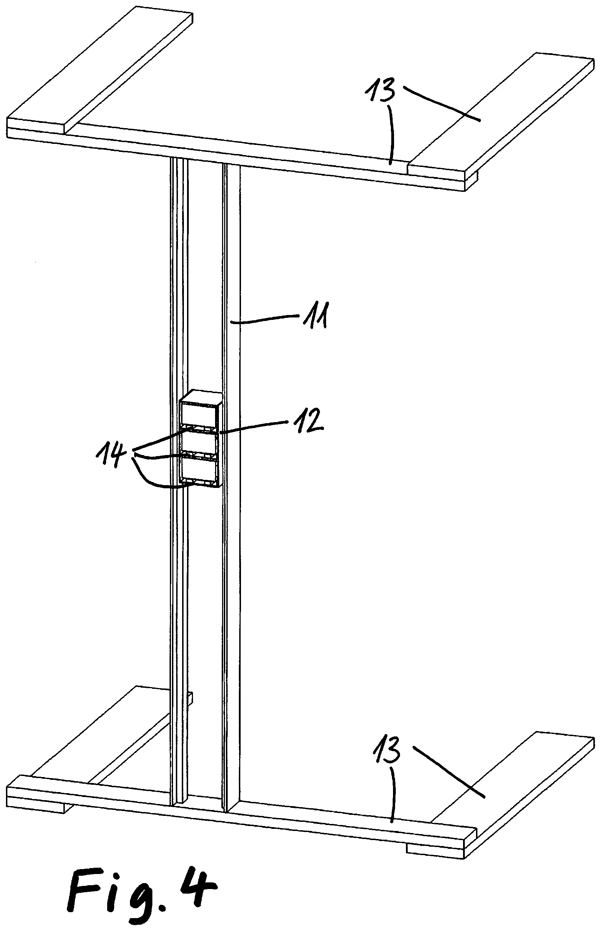

Die Verfahreinheit mit dem oberen und unteren Führungsrahmen 13 und dem Fahrturm 11 mit der Boxentransfervorrichtung 12 ist in Fig. 4 separat dargestellt. Hier ist auch die im Fahrturm 11 nach Art eines Aufzugs vertikal verfahrbare Boxentransfervorrichtung 12 deutlich erkennbar, die mit ihren beim Ausführungsbeispiel drei übereinander angeordneten er Transferplattformen 14 für die Aufnahme von drei Boxen 8 ausgebildet ist.

Durch das Vorsehen mehrerer Transferplattformen in der Boxentransfervorrichtung 12 können bei einem Verfahrvorgang mehrere Boxen 8 aus dem Lagerblock geholt oder in diesen zurückgestellt werden, so dass nicht jede einzelne Box einen separaten Verfahrvorgang benötigt und dadurch ein schnelleres und effizienteres Bereitstellen angeforderter Werkzeuge oder Rückführen zurückgegebene Werkzeuge möglich ist. Die beim Ausführungsbeispiel vorgesehene Anordnung der einzelnen Transferplattformen 14 der Boxentransfervorrichtung 12 übereinander ermöglicht das Vorsehen einer schmalen Gasse 9 in Tiefenrichtung des Lagerblocks zum Verfahren des Fahrturms 11.

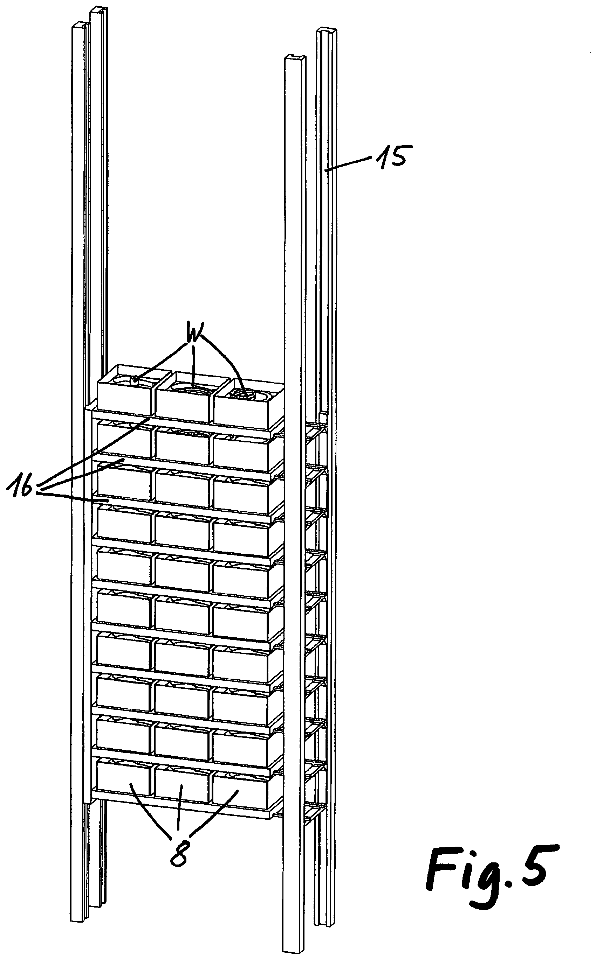

Wie aus Fig. 2 weiter erkennbar ist, befindet sich vorderhalb des Lagerblocks mit den Lagerplätzen für die Boxen 8 eine Pufferzone, die durch ein Gestell 15 und eine Mehrzahl von darin übereinander angeordneten Pufferplattformen 16 gebildet ist. Diese Pufferzone ist in Fig. 5 separat dargestellt. Bei dem dargestellten Ausführungsbeispiel sind zehn Pufferplattformen 16 übereinander angeordnet, die jeweils Platz für drei nebeneinander angeordnete Boxen 8 bieten, so dass die Pufferzone beim Ausführungsbeispiel insgesamt dreißig Boxen 8 aufnehmen kann. Die aus den mehreren übereinander angeordneten Pufferplattformen 16 gebildete Pufferplattformgruppe ist im Gestell 15 vertikal verfahrbar. Die Pufferzone hat einen solchen Abstand vom Lagerblock, dass der Fahrturm 11 zwischen dem Lagerblock und der Pufferzone quer verfahrbar ist, so dass jeder Boxenplatz der Pufferzone für die Boxen Transfervorrichtung 12 des Fahrturms 11 zugänglich ist.

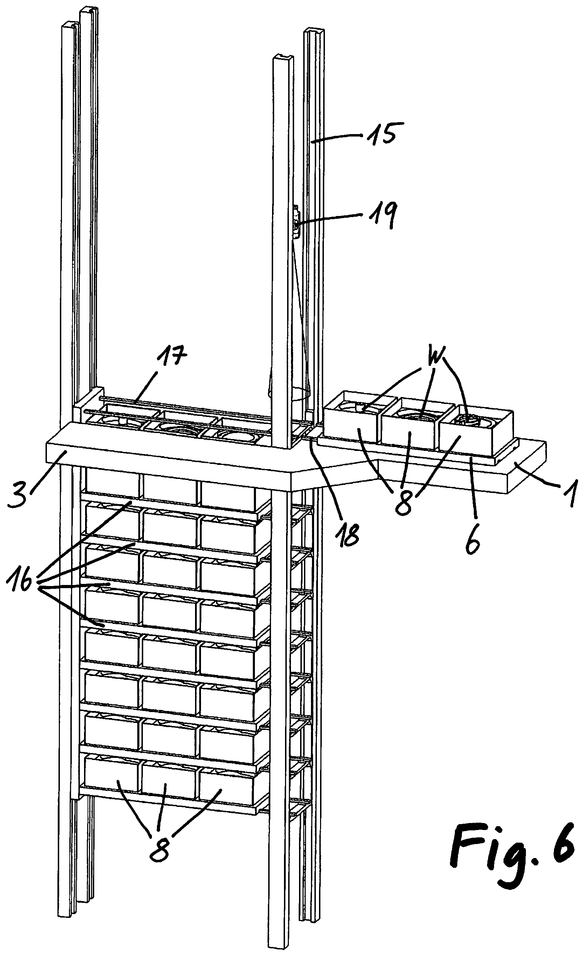

Fig. 6 zeigt die Pufferzone in gleicher Weise wie in Fig. 5, jedoch zusätzlich mit den Ausgabe/Rückgabe-Tisch 1 und dem Abstelltisch 3.

In Fig. 6 ist auch ersichtlich, dass die Pufferplattformen 16 der Pufferzone jeweils durch einen oben schon erwähnten Schlitten 6 und eine Schlittenführung 17 gebildet sind, auf welcher der Schlitten 6 seitwärts verfahrbar ist. Auf dem Ausgabe/Rückgabe-Tisch 1 ist ebenfalls eine Schlittenführung 18 angeordnet, die mit der Schlittenführung 17 der jeweiligen Pufferplattform 16 fluchtet, wenn die jeweilige Pufferplattform 16 durch entsprechendes vertikales Verfahren der Pufferplattformgruppe im Gestell 15 in eine mit dem Ausgabe/Rückgabe-Tisch 1 bündige Höhenposition gebracht ist. Während in Fig. 1 der Ausgabe/Rückgabe-Tisch 1 mit der darauf befindlichen Schlittenführung 18 leer, also ohne Schlitten 6, dargestellt ist, ist in Fig. 6 der Schlitten 6 von der betreffenden Pufferplattform 16 von der dort befindlichen Schlittenführung 17 seitwärts auf die Schlittenführung 18 auf dem Ausgabe/Rückgabe-Tisch 1 verfahren. Beim Verfahren von der Pufferzone auf den Ausgabe/Rückgabe-Tisch 1 oder umgekehrt passiert der Schlitten 6 jeweils die Transferöffnung 5 in der Verkleidung, die in Fig. 1 sichtbar ist.

In Fig. 6 ist außerdem ein Sensor 19 schematisch dargestellt, der oberhalb der Ebene des Ausgabe/Rückgabe-Tischs 1 im Gestell 15 innerhalb der Verkleidung des Werkzeugmagazins angeordnet ist, und der beim Ausführungsbeispiel als optischer Sensor mit Blickrichtung in das offene obere Ende von darunter hindurchgeführten Boxen 8 ausgebildet ist, wenn diese auf dem Schlitten 6 zwischen dem Ausgabe/Rückgabe-Tisch 1 und der Pufferzone verfahren werden. In Fig. 6 sieht man in den Boxen 8 jeweils ein eingelegtes Werkzeug W, das jeweils eine maschinenlesbare Kodierung hat, die sich oben am eingelegten Werkzeug W befindet und daher vom optischen Sensor 19 lesbar ist, wenn die betreffende Box den Sensor 19 beim Transferieren zwischen dem Ausgabe/Rückgabe-Tisch 1 und der Pufferzone passiert.

Mit dem Sensor 19 kann durch Lesen des maschinenlesbaren Codes das betreffende Werkzeug vom Transfersystem sowohl beim Ausfahren von der Pufferzone auf den Ausgabe/Rückgabe-Tisch 1 als auch beim Einfahren vom Ausgabe/Rückgabe-Tisch 1 in die Pufferzone erfasst und registriert werden, um beim Ausfahren im Transfersystem die Information zu speichern, dass das betreffende Werkzeug aus dem Werkzeugmagazin ausgegeben worden ist, und um beim Einfahren das betreffende Werkzeug zu identifizieren und im Transfersystem die Information zu speichern, dass sich das betreffende Werkzeug wieder im Werkzeugmagazin befindet, und damit zusammen die jeweilige Aufbewahrungsposition, also den jeweiligen Lagerplatz im Lagerblock zu speichern, an welchen die dieses Werkzeug enthaltende Box von der Verfahreinheit verbracht worden ist.

Statt eines optischen Sensors zum Abtasten eines optisch maschinenlesbaren Codes kann auch ein anderer Sensor Anwendung finden, der eine andere Art einer maschinenlesbaren Codierung auslesen kann, beispielsweise einen am Werkzeug angebrachten Transponder.

Es versteht sich, dass mit einem Werkzeugmagazin nach der Erfindung jede beliebige Art von Werkzeugen, wie beispielsweise Stanzwerkzeuge in Gestalt von Stanzstempeln, Abstreifern, Matrizen, oder Bohrwerkzeuge, Fräswerkzeuge, Dreh- oder Stoßwerkzeuge, aber auch sonstige Gegenstände wie Bauteile oder Arbeitshilfsmittel verwaltet und aufbewahrt werden können.

Dabei können nicht nur Gegenstände, die zum zeitweiligen Gebrauch benötigt werden, wie Werkzeuge oder Arbeitshilfsmittel, mit dem erfindungsgemäßen Werkzeugmagazin verwaltet und gehandhabt werden, sondern es können auch Verbrauchsmaterialien wie Schrauben, Muttern, sonstige Kleinteile oder Bauteile verwaltet und zur Verwendung bereitgehalten werden. Dabei können die betreffenden Boxen mit den jeweiligen Verbrauchsmaterialien oder Bauteilen gefüllt und zur Identifikation durch einen Sensor mit einer maschinenlesbaren Markierung versehen sein, wobei die Boxen zur Entnahme von Verbrauchsmaterial oder Bauteilen auf Anforderung auf den Tisch 1 ausgefahren und nach Entnahme des benötigten Materials wieder in das Magazin zurückgefahren werden können.

## Patentansprüche

1. Magazinsystem, insbesondere Werkzeugmagazin, mit:
einer Vielzahl von Aufbewahrungspositionen für in dem Magazin aufzunehmende Werkzeuge oder andere Gegenstände,
einer Ausgabe/Rückgabe-Position (1) zum Ausgeben oder Rückgeben von Werkzeugen oder anderen Gegenständen aus dem Magazin oder in das Magazin, und
einer Transfereinrichtung (11, 12, 13, 15, 16) zum Transferieren eines angeforderten Werkzeugs oder Gegenstands aus dem Magazin zu der Ausgabe/Rückgabe-Position (1) oder zum Rückführen eines zurückgegebenen Werkzeugs oder Gegenstands von der Ausgabe/Rückgabe-Position (1) in das Magazin,
**dadurch gekennzeichnet, dass**:
das Magazin einen nach Art eines Hochregallagers organisierten Lagerblock mit einer Vielzahl von Lagerplätzen aufweist, die in einer Mehrzahl von Etagen mit jeweils einer Mehrzahl von Lagerplätzen angeordnet sind,
eine Vielzahl von Boxen (8) zur Aufnahme von im Magazin aufzubewahrenden Werkzeugen oder Gegenständen vorgesehen ist, wobei jede Box (8) an einem der Lagerplätze abstellbar ist,
zwischen dem Lagerblock und der Ausgabe/Rückgabe-Position (1) eine Pufferzone (15,16) mit Zwischenlagerplätzen zum Zwischenlagern einer Mehrzahl von Boxen (8) vorgesehen ist,
die Transfereinrichtung eine Verfahreinheit (11, 12, 13) zum Transferieren von Boxen (8) zwischen den Lagerplätzen des Lagerblocks und Zwischenlagerplätzen der Pufferzone (15, 16) und eine Übergabeeinrichtung (6, 17, 18) zwischen der Pufferzone (15, 16) und der Ausgabe/Rückgabe-Position (1) aufweist,
die Werkzeuge oder Gegenstände oder die Boxen jeweils mit einer maschinenlesbaren Kodierung versehen sind,
und eine elektronische Steuerung vorgesehen ist, die beim Transferieren einer Box (8) von der Ausgabe/Rückgabe-Position (1) die Kodierung mittels eines Sensors (19) liest und diese zusammen mit dem jeweiligen Lagerplatz oder Zwischenlagerplatz, auf welchen die Box transferiert wird, speichert, und bei Anforderung eines bestimmten Werkzeugs oder Gegenstands oder einer bestimmten Box (8) über eine Bedieneinheit (7) das Transferieren der betreffenden Box (8) von dem jeweiligen Lagerplatz oder Zwischenlagerplatz zur Ausgabe/Rückgabe-Position (1) bewirkt, oder bei Rückgabe eines Werkzeugs oder Gegenstands oder einer Box (8) das Transferieren der betreffenden Box (8) von der Ausgabe/Rückgabe-Position (1) über die Pufferzone in einen beliebigen, gerade freien Lagerplatz im Lagerblock zu bewirken.

2. Magazinsystem nach Anspruch 1, wobei die Verfahreinheit (11, 12, 13) einen Fahrturm (11) aufweist, der in einem oberen und einem unteren Führungsrahmen (13) verfahrbar geführt ist und eine im Fahrturm (11) vertikal verfahrbare Boxentransfervorrichtung (12) aufweist, um eine Box (8) an einem jeweils angefahrenen Lagerplatz oder Zwischenlagerplatz zu übernehmen oder zu übergeben.

3. Magazinsystem nach Anspruch 2, wobei die im Fahrturm (11) vertikal verfahrbare Boxentransfervorrichtung (12) eine Mehrzahl von übereinander angeordneten Transferplattformen (14) für jeweils eine Box (8) aufweist.

4. Magazinsystem nach einem der Ansprüche 1 bis 3, wobei die Pufferzone (15, 16) eine Mehrzahl von Pufferplattformen (16) aufweist, die übereinander angeordnet sind und jeweils eine Mehrzahl von Zwischenlagerplätzen bilden.

5. Magazinsystem nach Anspruch 4, wobei die Mehrzahl von übereinander angeordneten Pufferplattformen (6) in einem Gestell (15) vertikal verfahrbar sind, um jeweils eine Pufferplattform (16) in eine höhenmäßig mit der Ausgabe/Rückgabe-Position (1) fluchtende Position zu bringen, in welcher eine Übergabeeinrichtung (6, 17, 18) die auf der jeweiligen Pufferplattform (16) befindlichen Boxen (8) zwischen der Pufferplattform (16) und der Ausgabe/Rückgabe-Position (1) transferieren kann.

6. Magazinsystem nach Anspruch 5, wobei jede Pufferplattform (16) eine Schlittenführung (17) und einen darauf angeordneten Schlitten (6) aufweist, wobei die jeweiligen Zwischenlagerplätze auf dem Schlitten (6) gebildet sind und der Schlitten Teil der Übergabeeinrichtung (6, 17, 18) ist, und wobei die als Tisch ausgebildete Ausgabe/Rückgabe-Position (1) ebenfalls eine Schlittenführung (18) aufweist, um ein Transferieren des Schlittens (6) zwischen der Ausgabe/Rückgabe-Position (1) und einer dazu höhenmäßig fluchtenden Pufferplattform (16) zu ermöglichen.
